# EUROPÄISCHE PATENTSCHRIFT

(11) **EP 4 113 222 B1**
(45) Veröffentlichungstag und Bekanntmachung des Hinweises auf die Patenterteilung: **28.05.2025**
(21) Anmeldenummer: 21181929.7
(22) Anmeldetag: 28.06.2021
(51) Int. Cl.: G05B 11/42, G05B 5/01

(54) **VERFAHREN UND STEUER- UND/ODER REGELEINHEIT ZUM BEREITSTELLEN EINES ZEITLICHEN VERLAUFS EINES MESSPARAMETERS SOWIE ENTSPRECHENDE MESSVORRICHTUNG**
METHOD AND CONTROL AND / OR REGULATING UNIT FOR PROVIDING A TIME PROFILE OF A MEASUREMENT PARAMETER AND CORRESPONDING MEASURING DEVICE
PROCÉDÉ ET UNITÉ DE COMMANDE ET/OU DE RÉGULATION PERMETTANT DE FOURNIR UNE ÉVOLUTION TEMPORELLE D'UN PARAMÈTRE DE MESURE, AINSI QUE DISPOSITIF DE MESURE CORRESPONDANT

(43) Veröffentlichungstag der Anmeldung: 04.01.2023
(73) Patentinhaber: Brabender GmbH & Co. KG, 47055 Duisburg (DE)
(72) Erfinder: SZCZESNY, David, 42697 Solingen (DE)
(74) Vertreter: Michalski Hüttermann & Partner Patentanwälte mbB

(56) Entgegenhaltungen:
- EP-A2- 0 844 545
- EP-A2- 1 239 357
- US-A1- 2006 167 570
- US-A1- 2018 059 005

## Beschreibung

Die Erfindung betrifft ein Verfahren zum Bereitstellen eines für eine Messung mit einer Messeinheit benötigten tatsächlichen zeitlichen Verlaufs eines Messparameters, wobei sich der zeitliche Verlauf durch eine Regelung des Messparameters mittels eines Reglers und eines Sollwertverlaufs für den Messparameter ergibt, wobei der Sollwertverlauf eine Serie von mehreren unmittelbar aufeinander folgenden streng monotonen oder konstanten Teilabschnitten aufweist, von denen zumindest zwei unmittelbar aufeinander folgende Teilabschnitte unterschiedliche Steigungen aufweisen, wobei aus dem Sollwertverlauf ein Führungsgrößen-Verlauf einer Führungsgröße für den Regler erstellt wird.

Die Erfindung betrifft weiterhin eine Steuer- und/oder Regeleinheit zum Bereitstellen eines für eine Messung mit einer Messeinheit benötigten tatsächlichen zeitlichen Verlaufs eines Messparameters, mit einem Regler zum Erstellen dieses tatsächlichen zeitlichen Verlaufs durch eine Regelung des Messparameters mittels eines Sollwertverlaufs für den Messparameter, wobei der Sollwertverlauf eine Serie von mehreren unmittelbar aufeinander folgenden streng monotonen oder konstanten Teilabschnitten aufweist, von denen zumindest zwei unmittelbar aufeinander folgende Teilabschnitte unterschiedliche Steigungen aufweisen und wobei die Steuer- und/oder Regeleinheit eingerichtet ist, aus dem Sollwertverlauf ein Führungsgrößen-Verlauf einer Führungsgröße für den Regler zu erstellen.

Die Erfindung betrifft schließlich noch eine Messvorrichtung mit einer Messeinheit und einer derartigen Steuer- und/oder Regeleinheit, die einen Regler zum Bereitstellen eines für eine Messung mit der Messeinheit benötigten tatsächlichen zeitlichen Verlaufs eines Messparameters aufweist.

Eine typische Messung, bei der ein zeitlicher Verlauf eines Messparameters geregelt werden muss bzw. sich der der zeitliche Verlauf durch eine Regelung des Messparameters mittels eines Reglers und eines Sollwertverlaufs für diesen Messparameter ergibt, ist eine Viskositätsbestimmung einer Probe (zum Beispiel in Form einer Suspension) mittels eines Viskosimeters/Rheometers, beispielsweise eines Rotationsrheometers mit Gefäß und Rührwerkzeug. Der zu regelnde Messparameter ist dabei die Temperatur des Systems aus Gefäß, Probe und Rührwerkzeug. Der für die Messung benötigte Sollwertverlauf dieser Temperatur besteht in der Regel aus drei unmittelbar aufeinander folgenden streng monotonen oder konstanten Teilabschnitten, nämlich einem streng monoton steigenden ersten Teilabschnitt in Form einer Heizrampe mit konstantem Temperaturgradienten, einem auf diese Heizrampe folgenden zweiten Teilabschnitt konstanter Temperatur und einem auf diesen zweiten Teilabschnitt folgenden streng monoton fallenden Teilabschnitt in Form einer Abkühlrampe mit konstantem (negativen) Temperaturgradienten. Als weiterer EingangsParameter bei der Messung ergibt sich eine Rührgeschwindigkeit und als Messgröße, aus der die Viskosität bestimmt wird, ein resultierendes Drehmoment beim Rühren.

Bei der Betrachtung der Regelung des Messparameters wird diese nun mittels der gängigen Begriffe der Regeltechnik beschrieben, bei der sich insgesamt ein Regelkreis ergibt. Das Viskosimeter weist einen entsprechenden Regler mit einer Regeleinrichtung auf und das System aus Gefäß, Probe und Rührwerkzeug bildet die Regelstrecke. Der Istwert des Messparameters (also die Regelgröße - hier die Temperatur) wird an der Regelstrecke ermittelt und die Regeleinrichtung des Reglers vergleicht diese Regelgröße mit der vorgegebenen Führungsgröße. In der Regel ergibt sich die Führungsgröße unmittelbar aus dem Sollwertverlauf. Dabei ist der Verlauf der Führungsgröße insbesondere gleich dem Sollwertverlauf.

In dem wissenschaftlichen Artikel »D.S. Suh and J. Jane: "Comparison of starch pasting properties at various cooking conditions using the Micro Visco-Amylo-Graph and the Rapid Visco Analyzer"; Cereal Chem. Vol. 80 No 6:745-749 (2003)« werden entsprechende Messungen diskutiert. Die typischen Auswirkungen der Temperaturregelung sind im Temperaturverlauf sichtbar.

Ergibt sich der Verlauf der Führungsgröße unmittelbar aus dem Sollwertverlauf, so ergeben sich Probleme bei der Temperaturregelung an den unstetigen Übergangspunkten ("Knickpunkten") der stets monotonen geraden Teilabschnitte des Sollwertverlaufs. Bei zügigen Messungen kommt es trotz hohem Aufwand bei der Optimierung der Regelparameter zu Über- und/oder Unterschreitungen der Soll-Vorgaben und folglich zu einer geringen Temperiergenauigkeit. Ist ein recht exaktes Durchfahren des Sollwertverlaufs (im Beispiel der Viskositätsbestimmung also des Temperatur-Sollverlaufs) gewünscht, muss die Messgeschwindigkeit verringert werden. Dann dauert eine Messung jedoch entsprechend lang.

US 2006/167570 A1 offenbart ein Verfahren und ein System zum Bereitstellen eines zeitlichen Verlaufs eines Prozessparameters, wobei ein fester Sollwert eingegeben wird und ein Regler den Prozessparameter derart bereitstellt, dass ein Überschwingen verhindert wird bzw. verringert wird.

Es ist Aufgabe der Erfindung Maßnahmen anzugeben, durch die ein schnelles und exaktes Durchfahren des Sollwertverlaufs ermöglicht wird.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem erfindungsgemäßen Verfahren zum Bereitstellen eines für eine Messung mit einer Messeinheit benötigten tatsächlichen zeitlichen Verlaufs eines Messparameters, wobei sich der zeitliche Verlauf durch eine Regelung des Messparameters mittels eines Reglers und eines Sollwertverlaufs für den Messparameter ergibt, wobei der Sollwertverlauf eine Serie von mehreren unmittelbar aufeinander folgenden streng monotonen oder konstanten Teilabschnitten aufweist, von denen zumindest zwei unmittelbar aufeinander folgende Teilabschnitte unterschiedliche Steigungen aufweisen, wobei aus dem Sollwertverlauf ein Führungsgrößen-Verlauf einer Führungsgröße für den Regler erstellt wird, ist vorgesehen, dass sich der Führungsgrößen-Verlauf ausgehend von dem Sollwertverlauf durch Glätten des Sollwertverlaufs einem jeweiligen Übergangsbereich zwischen zwei der unmittelbar aufeinander folgenden Teilabschnitten unterschiedlicher Steigung in Abhängigkeit von der Charakteristik des Reglers und/oder der Zeitspanne Δt, in der der tatsächliche zeitliche Verlauf des Messparameters durchlaufen wird, ergibt. Durch das Glätten ergibt sich eine an die beiden entsprechenden Steigungen angepasste Rundung. Diese Rundung lässt nur vergleichsweise kleine Regelabweichungen aufkommen, sodass Regelschwingungen mit größeren "Überschwingern" vermieden werden. Das Glätten erfolgt automatisch, bevorzugt durch eine "mathematische Rundung".

Gemäß einer bevorzugten Ausführungsform der Erfindung ist die Messeinheit eine Messeinheit eines Rheometers. Die entsprechende Messung ist ein typisches Beispiel einer Messung mit geregeltem Messparameter, der einem Sollwertverlauf mit den genannten Randbedingungen folgen soll.

Insbesondere ist vorgesehen, dass der Messparameter eine Temperatur T ist. Bei der Viskositätsmessung per Rheometer ist die Temperatur ein Messparameter, der einem Sollwertverlauf mit den genannten Randbedingungen folgen soll.

Allgemein werden Regler nach stetigem und unstetigem Verhalten unterschieden. Zu den bekanntesten stetigen Reglern gehören die "Standardregler" mit P-, PI-, PD- und PID-Verhalten. Ferner gibt es unter den stetigen Reglern verschiedene Sonderformen mit angepasstem Verhalten, um schwierige Regelstrecken regeln zu können. Dazu gehören beispielsweise Regelstrecken mit Totzeiten, mit nichtlinearem Verhalten, mit Drift der Streckenparameter und bekannten und unbekannten Störgrößen. Bei unstetigen Reglern ist die Ausgangsgröße gestuft. Darunter fallen die Zweipunktregler, Mehrpunktregler und Fuzzy-Regler. Optimal angepasste unstetige Regler können ein besseres dynamisches Verhalten der Regelgröße erzielen als die Standardregler.

Gemäß einer weiteren bevorzugten Ausführungsform der Erfindung ist vorgesehen, dass der Regler ein P-Regler, PI-Regler, ein PD-Regler oder ein PID-Regler ist. Mit anderen Worten ist der Regler ein stetiger Regler mit erkennbarem P- und/oder D-Anteil.

Gemäß noch einer weiteren bevorzugten Ausführungsform der Erfindung wird die Größe des Übergangsbereichs zwischen zwei unmittelbar aufeinander folgenden Teilabschnitten unterschiedlicher Steigung in Abhängigkeit von der Zeitspanne Δt gewählt, in der der Verlauf des Messparameters durchlaufen wird. Wird verhältnismäßig langsam gemessen, reicht eine Rundung/ein Glätten in einem kleinen Bereich.

Bei der erfindungsgemäßen Steuer- und/oder Regeleinheit zum Bereitstellen eines für eine Messung mit einer Messeinheit benötigten tatsächlichen zeitlichen Verlaufs eines Messparameters, mit einem Regler zum Erstellen dieses tatsächlichen zeitlichen Verlaufs durch eine Regelung des Messparameters mittels eines Sollwertverlaufs für den Messparameter, wobei der Sollwertverlauf eine Serie von mehreren unmittelbar aufeinander folgenden streng monotonen oder konstanten Teilabschnitten aufweist, von denen zumindest zwei unmittelbar aufeinander folgende Teilabschnitte unterschiedliche Steigungen aufweisen und wobei die Steuer- und/oder Regeleinheit eingerichtet ist, aus dem Sollwertverlauf ein Führungsgrößen-Verlauf einer Führungsgröße für den Regler zu erstellen, ist vorgesehen, dass die Steuer- und/oder Regeleinheit eingerichtet ist, den Führungsgrößen-Verlauf ausgehend von dem Sollwertverlauf durch Glätten des Sollwertverlaufs in einem jeweiligen Übergangsbereich zwischen zwei der unmittelbar aufeinander folgenden Teilabschnitten unterschiedlicher Steigung in Abhängigkeit von der Charakteristik des Reglers und/oder einer Zeitspanne Δt, in der der tatsächliche zeitliche Verlauf des Messparameters durchlaufen wird, zu erstellen.

Die im Zusammenhang mit dem erfindungsgemäßen Verfahren genannten Ausführungsformen der Erfindung ergeben sich entsprechend auch für die erfindungsgemäße Steuer- und/oder Regeleinheit.

Gemäß einer bevorzugten Ausführungsform der erfindungsgemäßen Steuer- und/oder Regeleinheit ist diese als Steuer- und/oder Regeleinheit für ein Rheometer ausgebildet.

Gemäß einer weiteren bevorzugten Ausführungsform der erfindungsgemäßen Steuer- und/oder Regeleinheit ist vorgesehen, dass der Messparameter eine Temperatur T ist.

Analog zum Verfahren ist auch bei der erfindungsgemäßen Steuer- und/oder Regeleinheit mit Vorteil vorgesehen, dass der Regler ein P-Regler, PI-Regler, ein PD-Regler oder ein PID-Regler ist. Mit anderen Worten ist der Regler bei dieser Ausgestaltung der Steuer- und/oder Regeleinheit ein stetiger Regler mit erkennbarem P- und/oder D-Anteil.

Bei der erfindungsgemäßen Messvorrichtung mit einer Messeinheit und einer Steuer- und/oder Regeleinheit die einen Regler zum Bereitstellen eines für eine Messung mit der Messeinheit benötigten tatsächlichen zeitlichen Verlaufs eines Messparameters aufweist, ist vorgesehen, dass die Steuer- und/oder Regeleinheit als vorstehend genannte Steuer- und/oder Regeleinheit ausgebildet ist.

Nachfolgend wird die Erfindung unter Bezugnahme auf die anliegenden Zeichnungen anhand von bevorzugten Ausführungsbeispielen exemplarisch erläutert, wobei die nachfolgend dargestellten Merkmale sowohl jeweils einzeln als auch in Kombination einen Aspekt der Erfindung darstellen können. Es zeigen:
Fig. 1 eine schematische Darstellung eines Rheometers gemäß einer bevorzugten Ausführungsform der Erfindung,
Fig. 2 eine zeitabhängige Darstellung des Messparameters und des Messsignals einer Viskositätsmessung mit dem Rheometer der Fig. 1, und
Fig. 3 Sollwertverlauf und daraus resultierender Führungsgrößenverlauf gemäß einer bevorzugten Ausführungsform der Erfindung.

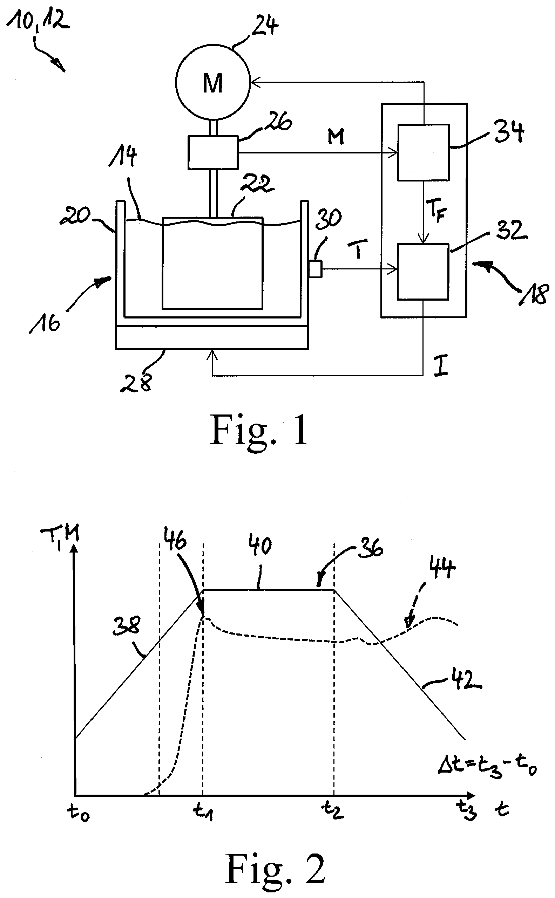

Die Fig. 1 zeigt eine als Rheometer 10 ausgebildete Messvorrichtung 12, die zum Messen einen vorgegebenen zeitlichen Verlauf zumindest eines ihrer Messparameter benötigt. Im Fall des Rheometers 10 ist dies eine Temperatur T einer Probe 14. Diese Probe ist eine Flüssigkeit, eine Suspension, etc. Das hier gezeigte Rheometer 10 ist ein Rotationsrheometer mit einem Messeinheit 16 und einer Steuer- und/oder Regeleinheit 18. Die Messeinheit 16 umfasst als zentrale Komponenten 20, 22 ein als Messbecher ausgestaltetes Gefäß 20, welches die zu untersuchende Probe 14 aufnimmt und ein paddelartiges Rührgerät 22 zum Rühren der Probe 14 im Gefäß 20. Weitere Komponenten der Messeinheit 16 sind ein Motor 24, der das Rührgerät 22 antreibt, eine Einrichtung 26 zur Drehmomentbestimmung beim Rühren, eine Temperiereinrichtung 28 zum Temperieren der Probe 14, einen Temperatursensor 30 zur Ermittlung Temperatur T der Probe 14 in dem Gefäß 20. Die Steuer- und/oder Regeleinheit 18 weist mehrere Komponenten auf, wobei hier nur auf die für die im Zusammenhang mit der Erfindung relevanten Komponenten näher eingegangen wird. Eine dieser Komponenten ist ein Regler 32 zur Regelung der Temperatur T der Probe 14, eine weitere dieser Komponenten ist eine Steuer- und Auswerteeinrichtung 34, die die Komponenten der Messeinheit 16 ansteuert und Signale der Messeinheit 16 auswertet.

Betrachtet man nur die Regelung, so ergibt sich ein Regelkreis mit dem Regler 32, einer aus Gefäß 20, Probe 14 und Rührgerät 22 gebildeten Regelstrecke 14, 20, 22 und der Temperiereinrichtung 28 als Stellglied. Der Messparameter ist hier im Beispiel die Temperatur T, welche bezüglich der Regelung die Regelgröße ist. Diese wird vom Regler 32 mit einer Führungsgröße T_{F} verglichen, die dem Regler 32 von der Steuer- und Auswerteeinrichtung 34 zur Verfügung gestellt wird. In Abhängigkeit von diesem Vergleich, im einfachsten Fall der Differenz ΔT = T_{F} - T wird dann ein Stellwert an das Stellglied ausgegeben, im Vorliegenden Fall ein Strom I an die Temperiereinrichtung 28, welche beispielsweise sowohl eine Heizung als auch einen Kühler zur Wärmeabfuhr aufweist. Die Führungsgröße ergibt sich aus einer in Fig. 2 gezeigten Sollwertkurve 36.

Zur Messung der Viskosität der Probe 14 dreht der Motor 24 das Rührgerät 22, wobei das entsprechende Drehmoment M per Drehmomentsensor 26 gemessen wird. Bei der Messung wird der Messparameter, also die Temperatur T, entsprechend des Sollwertverlaufs 36 verändert, sodass sich die in Fig. 2 gezeigten Graphen ergeben. Dabei ist die Temperatur T (allgemein also der Messparameter) über der Zeit t aufgetragen. Die Probe 14 ist im Beispiel eine stärkehaltige Suspension. Der Messzeitraum ist eine vom Sollwertverlauf 36 des Messparameters Temperatur T in drei Zeitabschnitte aufgeteilte Zeitspanne Δt. In jedem der Zeitabschnitte liegt ein linear verlaufender Teilabschnitt 38, 40, 42 des Sollwertverlaufs 36. Gleichzeitig ist ein resultierender Drehmomentverlauf 44 des gemessenen Drehmoments M eingezeichnet. Im ersten Zeitabschnitt t₀ bis t₁ wird mit konstantem Temperaturgradienten aufgeheizt, der entsprechende erste Teilabschnitt 38 des Sollwertverlaufs 36 ist linear steigend. Das Drehmoment M steigt bis zu einem Punkt maximaler Verkleisterung 46 stark an. Im zweiten Zeitabschnitt t₁ bis t₂ wird die Temperatur T konstant gehalten, der entsprechende zweite Teilabschnitt 40 des Sollwertverlaufs 36 ist konstant und der Verlauf des Drehmoments M leicht fallend. Im dritten Zeitabschnitt t2 bis t3 wird mit konstantem Temperaturgradienten abgekühlt, der entsprechende dritte Teilabschnitt 42 des Sollwertverlaufs ist linear fallend und der Verlauf des Drehmoments M leicht steigend.

In Fig. 2 ist nur der Sollwertverlauf 36 des Messparameters T (Temperatur) berücksichtigt und es wird stillschweigend davon ausgegangen, dass ein tatsächlicher zeitlicher Verlauf des Messparameters T dieser Vorgabe unmittelbar folgt. Diese Annahme ist jedoch nur für ein hinreichend langsames Durchlaufen des Sollwertverlaufs 36 gerechtfertigt, da hier die Trägheit der Regelstrecke bei gut angepasstem Regler 32 keine Probleme bereitet. Soll der Messzeitraum, also die Zeitspanne Δt, verkürzt werden, so kommt es schnell zu sogenannten Überschwingern und der tatsächliche zeitliche Verlauf des Messparameters T weicht insbesondere im Grenzbereich zwischen benachbarten Teilabschnitten 38, 40, 42 unterschiedlicher Steigung deutlich vom vorgegebenen Sollwertverlauf 36 ab.

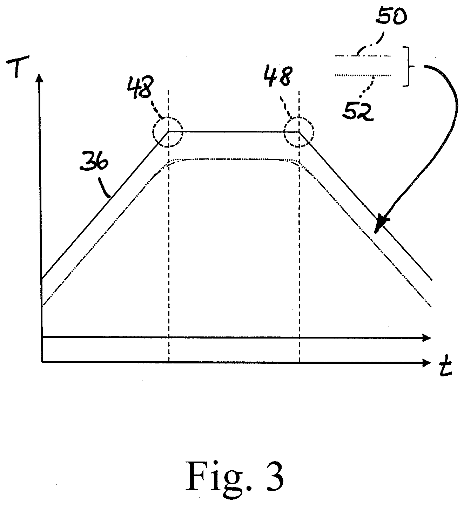

Um dies auszugleichen, wird - wie in Fig. 3 gezeigt - der Führungsgrößen-Verlauf 50 ausgehend von dem Sollwertverlauf 36 durch Glätten des Sollwertverlaufs 36 in einem jeweiligen Übergangsbereich 48 eines Übergangs zwischen den jeweils unmittelbar aufeinander folgenden Teilabschnitten 38, 40, 42 unterschiedlicher Steigung in Abhängigkeit von der Charakteristik des Reglers 32 und/oder der Zeitspanne Δt, in der der Verlauf des Messparameters (hier der Temperatur T) durchlaufen wird, erstellt. Dies geschieht in der Regel automatisch, im vorliegenden Beispiel ist die in Fig. 1 gezeigte Steuer- und Auswerteeinrichtung 34 dazu eingerichtet. Sie erstellt auf diese Weise nach Vorgabe des Sollwertverlaufs 36 automatisch den Führungsgrößen-Verlauf 50 und gibt die Führungsgröße T_{F} an den Regler 32 aus.

Der Sollwertverlauf 36 hat in jedem der Übergangsbereiche 48 die Form eines stumpfen Winkels. Beim Glätten des Sollwertverlaufs 36 in dem jeweiligen Übergangsbereich 48 wird der Übergang zwischen den von den beiden Schenkeln vorgegebenen Steigungen über eine die Schenkel verbindende Kurve, verglichen mit dem Übergang beim Knickpunkt des Winkels selbst, deutlich glatter gestaltet.

Soll nun bei der Regelung der Sollwertverlauf schnell durchfahren werden, also eine schnelle Regelung erfolgen, regeln Regler 32 fast aller Regeltypen, nachdem sich eine bemerkbare Regeldifferenz ergeben hat, tendenziell recht stark gegen, wodurch es zu einem Starken Schwingverhalten mit starken "Überschwingern" kommt. Durch das Glätten wird nun erreicht, dass dieses Schwingverhalten radikal unterdrückt wird, sodass die verbleibenden moderaten Regelabweichungen keine größere Rolle spielen oder gezielt genutzt werden können, um den tatsächlichen Messwertverlauf dem Sollwertverlauf gut nachfolgen zu lassen.

Im gezeigten Beispiel kommt es beim Übergang von der Heizphase (erster Teilabschnitt 38 des Sollwertverlaufs 36) zur Phase konstanter Temperatur (zweiter Teilabschnitt 40 des Sollwertverlaufs 36) zu einem ganz leichten Schwingen, sodass der tatsächliche Messwertverlauf 52 fast bis zum entsprechenden Knickpunkt des Sollwertverlaufs 36 heranreicht.

Es ergeben sich die folgenden Vorteile:
Es ist eine hohe Regelgenauigkeit auch mit einfachen, nicht optimierten Reglern möglich und es ergeben sich geringere Regelabweichungen beim Messparameter Temperatur, sodass eine schnelle Messdurchführung auch für temperatursensitive Proben ermöglicht wird, bei denen bereits bei geringsten Abweichungen eine ungewollte biologische und/oder chemische Reaktion ausgelöst wird. Auch ein "Überkochen" der Probe wird vermieden.

### Bezugszeichen

- 10: Rheometer
- 12: Messvorrichtung
- 14: Probe
- 16: Messeinheit
- 18: Steuer- und/oder Regeleinheit
- 20: Gefäß
- 22: Rührgerät
- 24: Motor
- 26: Drehmomentsensor
- 28: Temperiereinrichtung
- 30: Temperatursensor
- 32: Regler
- 34: Steuer- und Auswerteeinrichtung
- 36: Sollwertverlauf
- 38: erster Teilabschnitt (Sollwertverlauf)
- 40: zweiter Teilabschnitt (Sollwertverlauf)
- 42: dritter Teilabschnitt (Sollwertverlauf)
- 44: Drehmomentverlauf, gemessen
- 46: Punkt maximaler Verkleisterung
- 48: Übergangsbereich
- 50: Führungsgrößen-Verlauf

- 52: tatsächlicher Messwertverlauf
- I: Stellgröße (Strom)
- N: Drehmoment
- T: Messparameter Temperatur (Regelgröße der Regelung)
- T_{F}: Führungsgröße (der Regelung)

## Patentansprüche

1. Verfahren zum Bereitstellen eines für eine Messung mit einer Messeinheit (16) benötigten tatsächlichen zeitlichen Verlaufs (52) eines Messparameters (T),
wobei sich der zeitliche Verlauf (52) des Messparameters (T) durch eine Regelung des Messparameters (T) mittels eines Reglers (32) und eines Sollwertverlaufs (36) für den Messparameter (T) ergibt,
wobei der Sollwertverlauf (36) für den des Messparameter (T) eine Serie von mehreren unmittelbar aufeinander folgenden streng monotonen oder konstanten Teilabschnitten (38, 40, 42) aufweist, von denen zumindest zwei unmittelbar aufeinander folgende Teilabschnitte (38, 40, 42) unterschiedliche Steigungen aufweisen, wobei aus dem Sollwertverlauf (36) ein Führungsgrößen-Verlauf (50) einer Führungsgröße für den Regler (32) erstellt wird,
**dadurch gekennzeichnet, dass**
sich der Führungsgrößen-Verlauf (50) der Führungsgröße (T_{F}) für den Regler (32) ausgehend von dem Sollwertverlauf (36) des Messparameters (T) durch Glätten des Sollwertverlaufs (36) in einem jeweiligen Übergangsbereich (48) zwischen zwei der unmittelbar aufeinander folgenden Teilabschnitten (38, 40, 42) unterschiedlicher Steigung in Abhängigkeit von der Charakteristik des Reglers (32) und/oder der Zeitspanne Δt, in der der tatsächliche zeitliche Verlauf (52) des Messparameters durchlaufen wird, ergibt.

2. Verfahren nach Anspruch 1, **dadurch gekennzeichnet, dass** die Messeinheit eine Messeinheit (16) eines Rheometers (10) ist.

3. Verfahren nach Anspruch 1 oder 2, **dadurch gekennzeichnet, dass** der Messparameter eine Temperatur T ist.

4. Verfahren nach einem der Ansprüche 1 bis 3, **dadurch gekennzeichnet, dass** der Regler (32) ein P-Regler, PI-Regler, ein PD-Regler oder ein PID-Regler ist.

5. Verfahren nach einem der Ansprüche 1 bis 4, **dadurch gekennzeichnet, dass** die Größe
des Übergangsbereichs (48) zwischen zwei unmittelbar aufeinander folgenden Teilabschnitten (38, 40, 42) unterschiedlicher Steigung in Abhängigkeit von der Zeitspanne Δt gewählt wird, in der der Verlauf des Messparameters durchlaufen wird.

6. Steuer- und/oder Regeleinheit (18) zum Bereitstellen eines für eine Messung mit einer Messeinheit (16) benötigten tatsächlichen zeitlichen Verlaufs (52) eines Messparameters (T),
mit einem Regler (32) zum Erstellen dieses tatsächlichen zeitlichen Verlaufs (52) des Messparameters (T) durch eine Regelung des Messparameters (T) mittels eines Sollwertverlaufs (36) für den Messparameter (T),
wobei der Sollwertverlauf (36) für den Messparameter (T) eine Serie von mehreren unmittelbar aufeinander folgenden streng monotonen oder konstanten Teilabschnitten (38, 40, 42) aufweist, von denen zumindest zwei unmittelbar aufeinander folgende Teilabschnitte (38, 40, 42) unterschiedliche Steigungen aufweisen
und wobei die Steuer- und/oder Regeleinheit (18) eingerichtet ist, aus dem Sollwertverlauf (36) für den Messparameter (T) ein Führungsgrößen-Verlauf (50) einer Führungsgröße (T_{F}) für den Regler (32) zu erstellen,
**dadurch gekennzeichnet, dass**
die Steuer- und/oder Regeleinheit (18) eingerichtet ist, den Führungsgrößen-Verlauf (50) ausgehend von dem Sollwertverlauf (36) für den Messparameter (T) durch Glätten des Sollwertverlaufs (36) in einem jeweiligen Übergangsbereich (48) zwischen zwei der unmittelbar aufeinander folgenden Teilabschnitten (38, 40, 42) unterschiedlicher Steigung in Abhängigkeit von der Charakteristik des Reglers (32) und/oder einer Zeitspanne Δt, in der der tatsächliche zeitliche Verlauf (52) des Messparameters durchlaufen wird, zu erstellen.

7. Steuer- und/oder Regeleinheit nach Anspruch 6, **dadurch gekennzeichnet, dass** diese Steuer- und/oder Regeleinheit (18) als Steuer- und/oder Regeleinheit (18) für ein Rheometer ausgebildet ist.

8. Steuer- und/oder Regeleinheit nach Anspruch 6 oder 7, **dadurch gekennzeichnet, dass** der Messparameter eine Temperatur T ist.

9. Steuer- und/oder Regeleinheit (18) nach einem der Ansprüche 6 bis 8, **dadurch gekennzeichnet, dass** der Regler (32) ein P-Regler, PI-Regler, ein PD-Regler oder ein PID-Regler ist.

10. Messvorrichtung (12), insbesondere Rheometer (10), mit einer Messeinheit (16) und einer Steuer- und/oder Regeleinheit (18) nach einem der Ansprüche 6 bis 9, die einen Regler (32) zum Bereitstellen eines für eine Messung mit der Messeinheit (16) benötigten tatsächlichen zeitlichen Verlaufs (52) eines Messparameters aufweist.

## Claims

1. Method for providing an actual time profile (52) of a measurement parameter (T) required for a measurement by use of a measuring unit (16), wherein the time profile (52) of the measurement parameter (T) is obtained by controlling the measurement parameter (T) by means of a controller (32) and a setpoint profile (36) for the measurement parameter (T),
wherein the setpoint profile (36) for the measurement parameter (T) comprises a series of several directly successive strictly monotonic or constant partial sections (38, 40, 42), of which at least two directly successive partial sections (38, 40, 42) have different gradients, wherein a reference variable profile (50) of a reference variable for the controller (32) is produced from the setpoint profile (36),
**characterized in that**
the reference variable profile (50) of the reference variable (T_{F}) for the controller (32) is obtained starting from the setpoint profile (36) of the measurement parameter (T) by smoothing the setpoint profile (36) in a respective transition region (48) between two of the directly successive partial sections (38, 40, 42) of different gradients in dependence on the characteristic of the controller (32) and/or the time span Δt which the actual time profile (52) of the measurement parameter passes.

2. Method according to claim 1, **characterized in that** the measuring unit is a measuring unit (16) of a rheometer (10).

3. Method according to claim 1 or 2, **characterized in that** the measurement parameter is a temperature T.

4. Method according to any one of claims 1 to 3, **characterized in that** the controller (32) is a P controller, PI controller, PD controller or PID controller.

5. Method according to any one of claims 1 to 4, **characterized in that** the size of the transition region (48) between two immediately successive partial sections (38, 40, 42) of different gradients is selected as a function of the time span Δt which the profile of the measurement parameter passes.

6. Control and/or regulating unit (18) for providing an actual time profile (52) of a measurement parameter (T) required for a measurement by use of a measuring unit (16), comprising a controller (32) for producing this actual time-profile (52) of the measurement parameter (T) by controlling the measurement parameter (T) by means of a setpoint profile (36) for the measurement parameter (T),
wherein the setpoint profile (36) for the measurement parameter (T) comprises a series of several directly successive strictly monotonic or constant partial sections (38, 40, 42), of which at least two directly successive partial sections (38, 40, 42) have different gradients, and
wherein the control and/or regulating unit (18) is configured to create a reference variable profile (50) of a reference variable (T_{F}) for the controller (32) from the setpoint profile (36) for the measurement parameter (T),
**characterized in that**
the control and/or regulating unit (18) is configured to create the reference variable profile (50) starting from the setpoint profile (36) for the measurement parameter (T) by smoothing the setpoint profile (36) in a respective transition region (48) between two of the directly successive partial sections (38, 40, 42) of different gradients as a function of the characteristics of the controller (32) and/or a time span Δt which the actual time profile (52) of the measurement parameter passes.

7. Control and/or regulating unit according to claim 6, **characterized in that** this control and/or regulating unit (18) is configured as a control and/or regulating unit (18) for a rheometer.

8. Control and/or regulating unit according to claim 6 or 7, **characterized in that** the measurement parameter is a temperature T.

9. Control and/or regulating unit (18) according to any one of claims 6 to 8, **characterized in that** the controller (32) is a P controller, PI controller, PD controller or PID controller.

10. Measuring device (12), in particular a rheometer (10), comprising a measuring unit (16) and a control and/or regulating unit (18) according to any one of claims 6 to 9, comprising a controller (32) for providing an actual time profile (52) of a measurement parameter required for a measurement by use of the measuring unit (16).

## Revendications

1. Procédé permettant de fournir une évolution temporelle (52) réelle nécessaire pour une mesure avec une unité de mesure (16) d'un paramètre de mesure (T),
dans lequel l'évolution temporelle (52) du paramètre de mesure (T) est donnée par une régulation du paramètre de mesure (T) au moyen d'un régulateur (32) et d'une évolution d'une valeur de consigne (36) pour le paramètre de mesure (T),
dans lequel l'évolution de la valeur de consigne (36) pour le paramètre de mesure (T) présente une série de plusieurs tronçons (38, 40, 42) se succédant directement de manière strictement monotone ou constants, parmi lesquels au moins deux tronçons (38, 40, 42) se succédant directement présentent des pentes différentes, dans lequel une évolution de la valeur de référence (50) d'une grandeur de référence pour le régulateur (32) est établie à partir de l'évolution de la valeur de consigne (36),
**caractérisé en ce que**
l'évolution de la valeur de référence (50) de la grandeur de référence (T_{F}) pour le régulateur (32), en partant de l'évolution de la valeur de consigne (36) du paramètre de mesure (T), est donnée par un lissage de l'évolution de la valeur de consigne (36) dans une zone de transition (48) respective entre deux tronçons (38, 40, 42) se succédant directement de pentes différentes en fonction de la caractéristique du régulateur (32) et/ou de l'intervalle de temps Δt dans lequel l'évolution temporelle (52) réelle du paramètre de mesure s'écoule.

2. Procédé selon la revendication 1, **caractérisé en ce que** l'unité de mesure est une unité de mesure (16) d'un rhéomètre (10).

3. Procédé selon la revendication 1 ou la revendication 2, **caractérisé en ce que** le paramètre de mesure est une température (T).

4. Procédé selon l'une des revendications 1 à 3, **caractérisé en ce que** le régulateur (32) est un régulateur P, un régulateur PI, un régulateur PD ou un régulateur PID.

5. Procédé selon l'une des revendications 1 à 4, **caractérisé en ce que** la grandeur de la zone de transition (48) entre deux tronçons (38, 40, 42) se succédant directement de pentes différentes est choisie en fonction de l'intervalle de temps Δt dans lequel l'évolution du paramètre de mesure s'écoule.

6. Unité de commande et/ou de régulation (18) permettant de fournir une évolution temporelle (52) réelle nécessaire pour une mesure avec une unité de mesure (16) d'un paramètre de mesure (T), avec un régulateur (32) permettant d'établir cette évolution temporelle (52) réelle du paramètre de mesure (T) par une régulation du paramètre de mesure (T) au moyen d'une évolution de la valeur de consigne (36) pour le paramètre de mesure (T),
dans laquelle l'évolution de la valeur de consigne (36) pour le paramètre de mesure (T) présente une série de plusieurs tronçons (38, 40, 42) se succédant directement de manière strictement monotone ou constante, parmi lesquels au moins deux tronçons (38, 40, 42) se succédant directement présentent des pentes différentes et dans laquelle l'unité de commande et/ou de régulation (38) est conçue pour, à partir de l'évolution de la valeur de consigne (36) pour le paramètre de mesure (T), établir une évolution de la valeur de référence (50) d'une grandeur de référence (T_{F}) pour le régulateur (32),
**caractérisée en ce que**
l'unité de commande et/ou de régulation (18) est conçue pour établir l'évolution de la valeur de référence (50) en partant de l'évolution de la valeur de consigne (36) pour le paramètre de mesure (T), par un lissage de l'évolution de la valeur de consigne (36) dans une zone de transition (48) respective entre deux des tronçons (38, 40, 42) se succédant directement de pentes différentes en fonction de la caractéristique du régulateur (32) et/ou d'un intervalle de temps Δt dans lequel l'évolution temporelle (52) réelle du paramètre de mesure s'écoule.

7. Unité de commande et/ou de régulation selon la revendication 6, **caractérisée en ce que** cette unité de commande et/ou de régulation (18) est conçue comme une unité de commande et/ou de régulation (18) pour un rhéomètre.

8. Unité de commande et/ou de régulation selon la revendication 6 ou la revendication 7, **caractérisée en ce que** le paramètre de mesure est une température T.

9. Unité de commande et/ou de régulation selon l'une des revendications 6 à 8, **caractérisée en ce que** le que le régulateur (32) est un régulateur P, un régulateur PI, un régulateur PD ou un régulateur PID.

10. Dispositif de mesure (12), en particulier, rhéomètre (10), avec une unité de mesure (16) et une unité de commande et/ou de régulation (18) selon l'une des revendications 6 à 9, qui présente un régulateur (32) pour fournir une évolution temporelle (52) réelle nécessaire pour une mesure avec une unité de mesure (16) d'un paramètre de mesure.
